# FASCICULE DE BREVET EUROPEEN

(11) **EP 1 633 579 B1**
(45) Date de publication et mention de la délivrance du brevet: **28.10.2009**
(21) Numéro de dépôt: 04734833.9
(22) Date de dépôt: 26.05.2004
(51) Int. Cl.: B60C 5/00, B60C 17/01

(54) **DISPOSITIF DE DEPANNAGE D'UN ENSEMBLE MONTE TUBELESS POUR CYCLE**
NOTLAUFVORRICHTUNG FÜR FAHRRADSCHLAUCHLOSEREIFEN
DEVICE FOR REPAIRING A TUBELESS MOUNTED ASSEMBLY FOR A CYCLE

(30) Priorité: 03.06.2003 FR 0306655
(43) Date de publication de la demande: 15.03.2006
(73) Titulaire: Société de Technologie Michelin, 63000 Clermont-Ferrand (FR); Michelin Recherche et Technique S.A., 1763 Granges-Paccot (CH)
(72) Inventeur: MOREAU, Bernard, F-63100 Clermont-Ferrand (FR)
(74) Mandataire: Le Cam, Stéphane Georges Elie
(86) Numéro de dépôt international: PCT/EP2004/005627
(87) Numéro de publication internationale: WO 2004/106090

(56) Documents cités:
- EP-A- 0 818 330
- EP-A- 0 893 280
- DE-A- 10 032 300
- FR-A- 2 453 738

## Description

L'invention est relative aux ensembles montés pour cycle, plus particulièrement pour bicyclette, constitué d'une jante et d'un pneumatique, de type tubeless, c'est-à-dire aux ensembles montés pour cycle ne comportant pas de chambre à air. L'invention vise plus particulièrement des systèmes de dépannage de tels ensembles montés destinés à permettre à un usager de remettre son cycle en état de fonctionnement en cas de crevaison en cours de roulage.

Les ensembles montés usuels de type « tube-type » sont constitués d'une jante, d'un pneumatique et d'une chambre à air dont la fonction est de tenir la pression et de maintenir le pneumatique sur la jante. En cas de crevaison, ces ensembles montés peuvent être réparés de manière simple. Une réparation peut consister à identifier l'origine de la fuite d'air et donc un trou sur la chambre à air et à obturer celui-ci à l'aide d'une pièce de réparation. Une telle réparation est assez simple et peut être effectuée avec un minimum d'expérience. Une autre solution consiste à remplacer la chambre à air percée par une nouvelle, lorsque l'usager en possède une à sa disposition.

Pour les ensembles montés usuels de type « tube-type », le document FR 2 453 738 décrit une chambre à air permettant de remédier au pincement de ladite chambre à air, tout en diminuant les temps de montage et de réparation de l'ensemble monté, en cas de crevaison. C'est une solution de prévention du problème technique de pincement de la chambre à air, susceptible de générer une détérioration de celle-ci et donc une perte de pression.

Les ensembles montés de type « tubeless » sont constitués d'une jante et d'un pneumatique.

Une jante usuelle du type tubeless, telle que décrite dans le brevet EP 0 893 280 ou dans la demande de brevet WO 03/008208, est constituée de différentes zones ; tout d'abord, en partant d'un bord extérieur de la jante, on trouve un rebord de jante, ou aile, dont le rôle essentiel est de retenir le bourrelet du pneumatique à l'état gonflé ; ensuite le siège du bourrelet, sur lequel repose le bourrelet du pneumatique et qui en assure le serrage, ainsi que l'étanchéité à l'air et enfin une gorge destinée à permettre le montage du pneumatique, la largeur de ladite gorge étant prévue pour que les bourrelets assurent l'étanchéité en début de gonflage en prenant appui sur les parois de la gorge. Dans le cas d'une jante comportant des humps, ceux-ci sont présents entre le siège du bourrelet et la gorge qui autorise le montage. Les humps sont des bossages dont la fonction est d'éviter ou tout au moins de retarder la survenance d'un décoincement du pneumatique notamment en cas de baisse de pression. gorge qui autorise le montage. Les humps sont des bossages dont la fonction est d'éviter ou tout au moins de retarder la survenance d'un décoincement du pneumatique notamment en cas de baisse de pression.

Le procédé de montage usuel d'un pneumatique tubeless sur une telle jante consiste en différentes étapes qui sont les suivantes ; on commence par faire passer une partie du premier bourrelet par-dessus le rebord de jante et on place cette partie dans la gorge. On peut alors faire passer le reste du bourrelet par-dessus le rebord grâce à une légère ovalisation de la tringle correspondante du pneumatique. Il en est de même pour faire passer le second bourrelet par-dessus le rebord de la jante. Le montage est ensuite terminé par une étape finale de gonflage à une pression telle qu'elle assure la mise en place des bourrelets sur les sièges en appui sur les rebords de jante. Durant cette dernière étape les bourrelets quittent la gorge de montage et franchissent les humps qui forment un obstacle au passage desdits bourrelets jusqu'à leur siège respectif.

Bien que non limitée à de telles applications, l'invention sera plus particulièrement décrite en référence à des ensembles montés destinés à équiper des bicyclettes à usage routier. Une particularité de ces ensembles montés est que la pression de fonctionnement est de l'ordre de 8 bars.

Il est actuellement connu de réaliser des ensembles montés de type tubeless pour bicyclettes du type VTT (Vélo Tous Terrains) ; la pression de fonctionnement de tels pneumatiques est de l'ordre de 2 bars. En cas de crevaison, l'usager peut réparer le pneumatique lorsqu'il identifie l'origine de la fuite d'air. Dans le cas contraire, il peut tenter de se dépanner en utilisant une chambre à air correspondant à la dimension de l'ensemble monté. Pour cela, il est tout d'abord nécessaire d'enlever la valve pour laisser passer celle de la chambre à air. Ensuite, l'usager peut réussir à insérer les bourrelets du pneumatique dans la gorge de montage, la chambre à air étant insérée dans la cavité du pneumatique, puis à gonfler l'ensemble ainsi constitué.

Dans le cas d'un ensemble monté tubeless destinés à équiper des bicyclettes à usage routier, l'usager qui tente d'insérer une chambre à air correspondant à la dimension de l'ensemble monté rencontre énormément de difficultés. Pour parvenir à insérer les bourrelets du pneumatique dans la gorge de montage, la chambre à air étant insérée dans la cavité du pneumatique, l'usager doit nécessairement utiliser des outils avec le risque quasi certain de dégrader le pneumatique et/ou la chambre à air. A ce stade, il apparaît en outre qu'il ne peut pas assurer le gonflage de l'ensemble ainsi réalisé. Il apparaît que le gonflage de la chambre à air conduit à un blocage des bourrelets du pneumatique au fond de la gorge.

Les inventeurs se sont ainsi donnés pour mission la réalisation d'un système de dépannage en cas de crevaison d'un ensemble monté de type « tubeless » constitué d'une jante et d'un pneumatique pour des utilisations sur bicyclette à usage routier.

Ce but a été atteint selon l'invention par un dispositif de dépannage d'un ensemble monté de type tubeless pour cycle, constitué d'une jante et d'un pneumatique comportant notamment deux tringles souples dans ses bourrelets, ladite jante étant constituée de deux ailes, accolées à deux sièges, destinés à recevoir les bourrelets du pneumatique, séparés l'un de l'autre par une gorge de montage, ledit dispositif étant constitué d'une chambre à air dont le diamètre intérieur de ladite chambre à air est supérieur au diamètre des sièges de la jante, et de préférence supérieur au diamètre extérieur de la jante.

Le diamètre intérieur de la chambre à air est défini comme étant le diamètre du plus grand cylindre, de section circulaire, pouvant s'inscrire dans la chambre à air sans déformation de celle-ci, l'axe du cylindre étant confondu avec l'axe de rotation de la chambre à air lorsque celle-ci est incorporée dans un ensemble monté.

Ce diamètre intérieur de la chambre à air est mesuré à l'état conformé, non gonflé.

Le diamètre des sièges de jante, qui sont destinés à recevoir les bourrelets du pneumatique correspond au diamètre radialement le plus à l'intérieur des bourrelets du pneumatique lorsque celui-ci est monté sur la jante.

Selon l'invention, on entend par « axiale », une direction parallèle à l'axe de rotation du pneumatique ou de la jante et par « radiale » une direction coupant l'axe de rotation du pneumatique ou de la jante et perpendiculaire à celui-ci. L'axe de rotation du pneumatique ou de la jante est l'axe autour duquel le pneumatique ou la jante tourne en utilisation normale. Le plan médian circonférentiel est un plan perpendiculaire à l'axe de rotation du pneumatique ou de la jante et qui divise le pneumatique ou la jante en deux moitiés. Un plan radial est un plan qui contient l'axe de rotation du pneumatique ou de la jante.

Le dispositif de dépannage ainsi constitué d'une chambre à air telle que définie précédemment va permettre à l'usager de se, dépanner en cas de crevaison. En effet, les essais réalisés ont montré que la chambre à air selon l'invention autorise l'usager à l'insérer dans le pneumatique lors du montage de celui-ci sur la jante pour ensuite en effectuer le gonflage.

Il apparaît en outre que le gonflage de la chambre à air conduit à la mise en place des bourrelets du pneumatique sur les sièges de la jante ; cette mise en place des bourrelets sur les sièges de la jante est obtenue de manière sensiblement symétrique, ce qui assure une conduite confortable du cycle ainsi dépanné.

Selon un mode de réalisation préféré de l'invention, la chambre à air du dispositif de dépannage est telle que, à l'état non gonflé, le rapport du périmètre intérieur de la section du pneumatique sur le périmètre de la section de la chambre à air est supérieur à 1,6 et de préférence supérieur à 1,8.

Le périmètre intérieur de la section du pneumatique est mesuré dans un plan radial entre les pointes des bourrelets du pneumatique, les pointes des bourrelets étant les limites entre la surface interne et la surface externe du pneumatique. La surface interne d'un pneumatique tubeless est la surface venant au contact de l'air de gonflage.

Selon cette réalisation préférée de l'invention qui spécifie le périmètre et donc le diamètre de la section de la chambre à air de dépannage par rapport au périmètre intérieur de la section du pneumatique, les risques de pincement de la chambre à air lors du montage sont diminués.

De préférence encore, pour diminuer encore ces risques de pincement de la chambre à air lors du montage, le rapport du périmètre intérieur de la section du pneumatique sur le périmètre de la section de la chambre à air est supérieur à 2.

Une variante avantageuse de réalisation d'un dispositif de dépannage selon l'invention, prévoit que le rapport du diamètre intérieur de la chambre à air sur le diamètre de la section de la chambre à air est supérieur à 50 et de préférence supérieur à 60.

Avantageusement encore, la chambre à air du dispositif de dépannage est constituée d'un mélange de matériaux polymériques. Selon l'invention, il peut avantageusement s'agir d'un matériaux dont l'imperméabilité à l'air n'est pas au niveau requis usuellement pour une chambre à air destinée à un ensemble monté de type tube-type. En effet, la fonction de la chambre à air selon l'invention est de dépanner un ensemble monté tubeless en venant obturer un trou. La chambre à air vient donc sur la totalité de la surface intérieure du pneumatique, exceptée au niveau du trou, négligeable en terme de surface par rapport à la surface intérieure du pneumatique, en doublon d'une surface elle-même étanche par définition. Dans le cas d'un pneumatique de type tube-type, la fonction de la chambre à air est notamment d'assurer le maintien de la pression et doit donc être le plus étanche possible à l'air.

Selon un mode de réalisation préférée de l'invention, la chambre à air est ainsi réalisée en caoutchouc naturel. Un avantage d'une telle réalisation est de pouvoir réaliser une chambre à air à un coût réduit.

Une autre variante avantageuse de l'invention prévoit que la chambre à air de dépannage comporte et/ou est associée à des moyens d'identification. Selon cette variante de réalisation de l'invention, il est possible de simplifier l'usage d'un tel dispositif de dépannage en éliminant les risques de confusion de cette chambre à air de dépannage avec d'autres chambres à air d'usages classiques. Les risques pour l'usager de se retrouver, en cas de besoin de dépannage lors d'un roulage, avec une chambre à air non adaptée à un ensemble monté de type tubeless pour en effectuer le dépannage sont ainsi fortement diminués.

Selon un premier mode de réalisation de cette variante de l'invention, la chambre à air est colorée de manière distinctive, notamment par rapport aux couleurs usuelles des chambres à air utilisées dans les ensembles montés de type tube-type.

Selon un deuxième mode de réalisation de cette variante de l'invention, la chambre à air comporte une inscription distinctive.

Selon un troisième mode de réalisation de cette variante de l'invention, la chambre à air est associée à un emballage distinctif.

L'invention propose encore de combiner ces différents moyens deux à deux ou tous ensembles pour aider encore à distinguer la chambre à air de dépannage selon l'invention d'une chambre à air usuelle.

D'autres détails et caractéristiques avantageux de l'invention ressortiront ci-après de la description d'un exemple de réalisation de l'invention en référence aux figures 1 à 3 qui représentent :
- figure 1, un schéma d'une vue en coupe radiale d'une chambre à air selon l'invention,
- figure 2, un schéma d'une vue partielle en coupe radiale d'un ensemble montée de type tube-type,
- figure 3, un schéma d'une vue partielle en coupe radiale d'un ensemble monté de type tubeless, avant gonflage.

Les figures ne sont pas représentées à l'échelle pour en simplifier la compréhension.

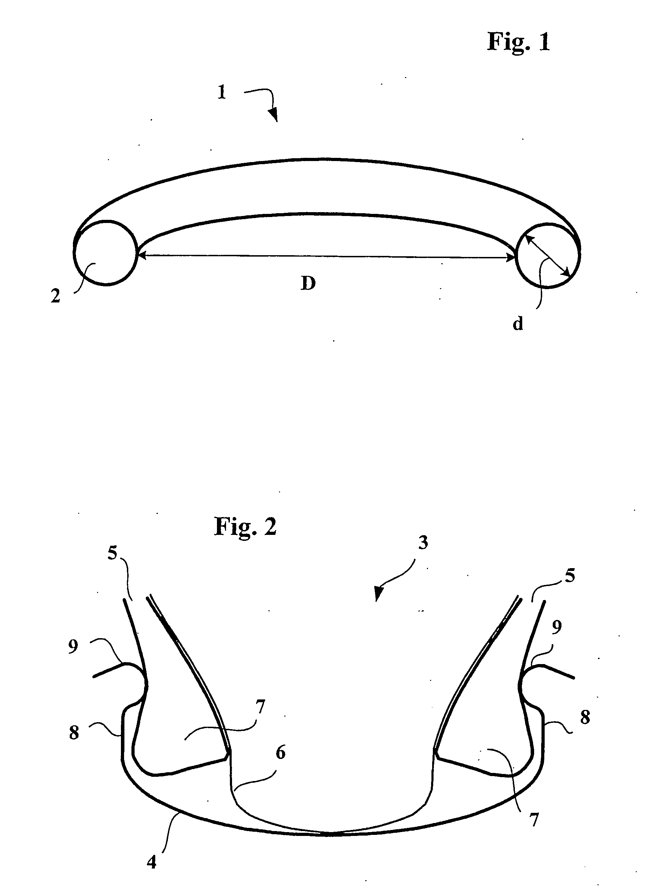

La figure 1 représente schématiquement une vue en coupe radiale d'une chambre à air 1 selon l'invention destiné à un ensemble monté de dimension 22-622. La chambre à air 1 présente un diamètre intérieur D égal à 633 mm et un diamètre d de la section 2 égal à 12,5 mm.

Le diamètre des sièges de la jante de l'ensemble monté de type tubeless est égal à 621,5 mm et le diamètre extérieur de ladite jante est égal à 632,7 mm. La relation définie selon l'invention selon laquelle le diamètre intérieur D de la chambre à air est supérieur aux diamètres des sièges de la jante de l'ensemble monté, et de préférence supérieur au diamètre extérieur de la jante, est donc vérifiée.

De la même façon, le rapport du périmètre intérieur de la section du pneumatique, égal à 63 mm, sur le périmètre de la section de la chambre à air est égal à 1,604 et donc supérieur à 1,6.

Enfin, le rapport du diamètre intérieur D de la chambre à air sur le diamètre d de la section de la chambre à air est égal à 50,64 et donc supérieur à 50.

La figure 2 représente schématiquement une vue partielle en coupe radiale d'un ensemble montée 3 de type tube-type comprenant une jante 4 associée à un pneumatique 5 et une chambre à air 6. Cette figure 2 illustre la fonction de la chambre à air dans un ensemble monté de type tube-type. Il ressort clairement que la chambre à air 6 gonflée permet de maintenir les bourrelets 7 du pneumatique 5 contre les ailes 8 de la jante où ceux-ci sont coincés par les crochets 9.

La fonction d'une chambre à air usuelle utilisée dans un ensemble monté de type tube-type est donc de maintenir la pression de gonflage et donc notamment de maintenir le pneumatique 5 sur la jante 4.

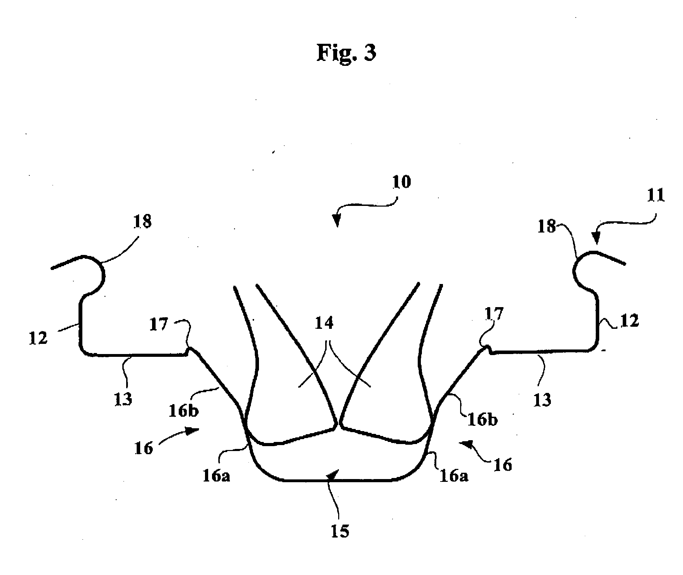

La figure 3 illustre un schéma d'une vue partielle en coupe radiale d'un ensemble monté 10 de type tubeless. L'ensemble monté 10 comporte une jante 11 constituée de deux ailes 12, accolées à deux sièges 13, destinés à recevoir les bourrelets 14 d'un pneumatique. Les sièges 13 sont séparés l'un de l'autre par une gorge de montage 15. La gorge de montage 15 comporte des parois 16 qui sont séparées des sièges 13 par des bossages ou humps 17.

L'orientation des ailes 12 est sensiblement parallèle au plan médian circonférentiel. Les sièges des bourrelets. 13 sont sensiblement parallèles à l'axe de rotation. Les parois 16 de la gorge de montage 15 sont dans la représentation de la figure 1 réalisées en deux parties ; des premières parties basses 16a qui forment un angle d'environ 30° et sont centrées sur le plan circonférentiel médian et des secondes parties ou parties hautes 16b qui forment un angle d'environ 65° et sont centrées sur le plan circonférentiel médian.

Les ailes 12 présentent en outre dans leur partie supérieure des crochets 18 qui constituent un débord vers l'intérieur de la jante par rapport au plan des ailes aux points d'accrochage desdits crochets.

Lors du montage d'un pneumatique de type tubeless, de forme traditionnelle, sur une telle jante 11, on commence par amener les deux bourrelets 14 du pneumatique dans la gorge de montage 15 de la jante 11. La figure 3 illustre cette phase du montage de l'ensemble monté 10.

Dans une étape ultérieure, on gonfle le pneumatique ; pour cela, la jante 10 est munie d'une valve, non représentée, avantageusement placée dans le fond de gorge 15 pour permettre d'injecter l'air directement entre les deux bourrelets du pneumatique. Le fond de gorge 15 est prévu avec une largeur telle qu'il puisse recevoir les deux bourrelets, ceux-ci étant en appui contre les parois 16 pour assurer l'étanchéité du système. Ce résultat est notamment obtenu par la présence des parois 16a inclinées notamment en partie basse de la gorge 15.

Les bourrelets du pneumatique sont ainsi mis en place sur les sièges 13 prévus à cet effet, au contact des ailes 12 qui retiennent lesdits bourrelets.

Les ailes 12 comportent encore des crochets 18 qui contribuent également au maintien des bourrelets 14 du pneumatique lorsque la pression augmente au sein du pneumatique.

La comparaison de ce schéma de la figure 3 qui représente un ensemble monté 10 de type tubeless avec celui de la figure 2 qui représente un ensemble monté 3 de type tube-type montre que l'insertion d'une chambre à air 6 usuelle pour un ensemble monté de type tube-type dans un ensemble monté de type tubeless peut être problématique. En effet, il apparaît tout d'abord que de par sa conception l'ensemble monté de type tubeless ne laisse que peu de place pour le passage d'une chambre à air entre les bourrelets 14 du pneumatique lorsque ceux-ci se trouvent dans la gorge de montage 15 avant le gonflage. L'insertion d'une chambre à air usuelle pour un ensemble monté de type tube-type nécessiterait donc de plier ladite chambre dans la cavité du pneumatique au risque de créer des pincements de ladite chambre à air lors du gonflage. En outre, la cavité d'un pneumatique routier est d'une dimension telle qu'il faudrait une adresse particulière pour parvenir à y loger ladite chambre à air usuelle pour un ensemble monté de type tube-type.

Les essais qui ont été réalisés avec des chambres à air usuelles ont montré en outre que, lors du gonflage, une telle chambre à air s'oppose à la montée des bourrelets qui ne parviennent pas sur les sièges de j ante.

Lorsque lors de certains essais un montage a été réussi, il est apparu qu'un tel montage était imparfait et conduisait à un pilotage inconfortable du vélo voire dangereux. En effet, le montage obtenu était alors non symétrique, un seul bourrelet parvenant au mieux à franchir un hump.

Au contraire, la chambre à air selon l'invention dont le diamètre d de la section 2 est réduit par rapport à une chambre à air usuelle et dont le diamètre intérieur D est supérieur à celui d'une chambre à air usuelle, peut être logée dans la cavité interne d'un pneumatique avant le montage de celui-ci. Et lors du gonflage de la chambre à air selon l'invention, celle-ci, notamment du fait de ses dimensions, prend essentiellement appui sur le sommet du pneumatique, tout au moins dans un premier temps, pour venir obturer le trou à l'origine de la crevaison et autorise le passage des bourrelets sur les sièges de jante.

Il apparaît en outre que le passage des bourrelets sur les sièges de jante est obtenu de manière sensiblement symétrique et uniforme, garantissant confort et sécurité à l'usager.

La chambre à air ainsi définie selon l'invention avec des dimensions inhabituelles dont la fonction première est d'obturer un trou permet l'insertion des bourrelets du pneumatique dans la gorge de montage, la chambre à air étant insérée dans la cavité du pneumatique et permet en outre le gonflage de l'ensemble monté.

Lors du montage de la chambre à air de dépannage selon l'invention, il reste toutefois nécessaire au préalable de démonter la valve de la jante tubeless pour passer celle de la chambre à air de dépannage. Seule la zone de la chambre à air comportant la valve vient entre les bourrelets 14 du pneumatique lorsque ceux-ci sont dans la gorge de montage 15 de la jante avant le gonflage.

## Revendications

1. Dispositif de dépannage d'un ensemble monté (10) de type tubeless pour cycle, constitué d'une jante (11) et d'un pneumatique comportant notamment deux tringles souples dans ses bourrelets (14), ladite jante (11) étant constituée de deux ailes (12), accolées à deux sièges (13), destinés à recevoir les bourrelets (14) d'un pneumatique, séparés l'un de l'autre par une gorge de montage (15), ledit dispositif étant constitué d'une chambre à air (1), **caractérisé en ce que** le diamètre intérieur D de la chambre à air (1) est supérieur au diamètre des sièges (13) de la jante (11).

2. Dispositif de dépannage selon la revendication 1 **caractérisé en ce que**, à l'état non gonflé, le rapport du périmètre intérieur de la section du pneumatique sur le périmètre de la section (2) de la chambre à air (1) est supérieur à 1,6 et de préférence supérieur à 1,8.

3. Dispositif de dépannage selon la revendication 1 ou 2, **caractérisé en ce que** le rapport du diamètre intérieur D de la chambre à air (1) sur le diamètre d de la section (2) de la chambre à air (1) est supérieur à 50 et de préférence supérieur à 60.

4. Dispositif de dépannage selon l'une des revendications précédentes, **caractérisé en ce que** la chambre à air (1) est constituée d'un mélange de matériaux polymériques.

5. Dispositif de dépannage selon la revendications. 4, **caractérisé en ce que** la chambre à air (1) est constituée d'un caoutchouc naturel.

6. Dispositif de dépannage selon l'une des revendications précédentes, **caractérisé en ce que** la chambre à air (1) comporte et/ou est associée à des moyens d'identification.

7. Dispositif de dépannage selon la revendication 6, **caractérisé en ce que** la chambre à air (1) est colorée de manière distinctive.

8. Dispositif de dépannage selon la revendication 6 ou 7, **caractérisé en ce que** la chambre à air (1) comporte une inscription distinctive.

9. Dispositif de dépannage selon l'une des revendications 6 à 8, **caractérisé en ce que** la chambre à air (1) est associée à un emballage distinctif.

## Claims

1. A device for repairing a mounted assembly (10) of the tubeless type for cycles, consisting of a rim (11) and a tyre comprising in particular two flexible bead wires in its beads (14), said rim (11) consisting of two wings (12) attached to two seats (13) designed to receive the beads (14) of a tyre and separated from one another by a mounting groove (15), said device consisting of an inner tube (1), **characterised in that** the internal diameter D of the inner tube (1) is greater than the diameter of the rim (11) seats (13).

2. A repair device according to claim 1, **characterised in that**, in the non-inflated state, the ratio of the internal perimeter of the section of the tyre to the perimeter of the section (2) of the inner tube (1) is greater than 1.6 and preferably greater than 1.8.

3. A repair device according to claim 1 or 2, **characterised in that** the ratio of the internal diameter D of the inner tube (1) to the diameter d of the section (2) of the inner tube (1) is greater than 50 and preferably greater than 60.

4. A repair device according to any one of the preceding claims, **characterised in that** the inner tube (1) consists of a mixture of polymeric materials.

5. A repair device according to claim 4, **characterised in that** the inner tube (1) is made of natural rubber.

6. A repair device according to any one of the preceding claims, **characterised in that** the inner tube (1) comprises and/or is associated with means of identification.

7. A repair device according to claim 6, **characterised in that** the inner tube (1) is distinctively coloured.

8. A repair device according to claim 6 or 7, **characterised in that** the inner tube comprises a distinctive marking.

9. A repair device according to any one of claims 6 to 8, **characterised in that** the inner tube (1) is associated with distinctive packaging.

## Patentansprüche

1. Vorrichtung zur Reparatur einer montierten Einheit (10) vom schlauchlosen Typ für ein Fahrrad, die aus einer Felge (11) und aus einem Luftreifen besteht, der insbesondere zwei biegsame Wulstkerne in seinen Wülsten (14) aufweist, wobei die Felge (11) aus zwei Flügeln (12) besteht, die an zwei Sitze (13) angefügt sind, welche dazu bestimmt sind, die Wülste (14) eines Luftreifens aufzunehmen und durch eine Montagerille (15) voneinander getrennt sind, wobei die Vorrichtung aus einem Luftschlauch (1) besteht, **dadurch gekennzeichnet, dass** der Innendurchmesser D des Luftschlauchs (1) größer ist als der Durchmesser der Sitze (13) der Felge (11).

2. Reparaturvorrichtung nach Anspruch 1, **dadurch gekennzeichnet, dass** im nicht aufgepumpten Zustand das Verhältnis des Innenumfangs des Querschnitts des Luftreifens zum Umfang des Querschnitts (2) des Luftschlauchs (1) größer als 1,6 und vorzugsweise größer als 1,8 ist.

3. Reparaturvorrichtung nach Anspruch 1 oder 2, **dadurch gekennzeichnet, dass** das Verhältnis des Innendurchmessers D des Luftschlauchs (1) zum Durchmesser d des Querschnitts (2) des Luftschlauchs (1) größer als 50 und vorzugsweise größer als 60 ist.

4. Reparaturvorrichtung nach einem der vorhergehenden Ansprüche, **dadurch gekennzeichnet, dass** der Luftschlauch (1) aus einer Mischung von Polymermaterialien besteht.

5. Reparaturvorrichtung nach Anspruch 4, **dadurch gekennzeichnet, dass** der Luftschlauch (1) aus einem natürlichen Kautschuk besteht.

6. Reparaturvorrichtung nach einem der vorhergehenden Ansprüche, **dadurch gekennzeichnet, dass** der Luftschlauch (1) Identifikationsmittel aufweist und/oder ihnen zugeordnet ist.

7. Reparaturvorrichtung nach Anspruch 6, **dadurch gekennzeichnet, dass** der Luftschlauch (1) charakteristisch gefärbt ist.

8. Reparaturvorrichtung nach Anspruch 6 oder 7, **dadurch gekennzeichnet, dass** der Luftschlauch (1) eine charakteristische Aufschrift aufweist.

9. Reparaturvorrichtung nach einem der Ansprüche 6 bis 8, **dadurch gekennzeichnet, dass** der Luftschlauch (1) einer charakteristischen Verpackung zugeordnet ist.
